# EUROPEAN PATENT APPLICATION

(11) **EP 4 632 687 A1**
(43) Date of publication of application: **15.10.2025**
(21) Application number: 24169973.5
(22) Date of filing: 12.04.2024
(51) Int. Cl.: G06V 10/44, G06V 10/80, G06V 20/56

(54) **METHOD FOR DETERMINING A ROAD SURFACE CONDITION, METHOD FOR CONTROLLING A VEHICLE, DATA PROCESSING APPARATUS, VEHICLE, COMPUTER PROGRAM, COMPUTER-READABLE STORAGE MEDIUM, AND METHOD FOR TRAINING A COMBINATION OF ARTIFICIAL NEURAL NETWORKS**

(71) Applicant: Volvo Car Corporation, 405 31 Göteborg (SE)
(72) Inventor: KARUNASEKERA, Hasith, 40531 Göteborg (SE); YANG, Derong, 40531 Göteborg (SE); VIJAYAN, Arun Shenbaga Priyan, 40531 Göteborg (SE); SJÖBERG, Jonas, 40531 Göteborg (SE)
(74) Representative: Maiwald GmbH

(57) **Abstract**

The disclosure relates to a method for determining a road surface condition (16). The method comprises obtaining first data and obtaining second data. The first data comprises a representation of the road surface (14) and originates from a sensor (18) of a first type. The second data comprises a representation of the road surface (14) and originates from a sensor (20) of a second type. The method further comprises generating third data by applying a feature extraction technique on the first data and generating fourth data by applying a feature extraction technique on the second data. Additionally, the method comprises generating fifth data by fusing the third data and the fourth data and determining the road surface condition (16) by classifying the fifth data in at least one class of a set of predefined classes. Furthermore, a method for controlling a vehicle (10), a data processing apparatus (22), a vehicle (10), a computer program (42), and a computer-readable storage medium (40) are presented. Also, a method for training a combination of artificial neural networks is described.

## Description

### TECHNICAL FIELD

The present disclosure relates to a method for determining a road surface condition.

Moreover, the present disclosure is directed to a method for controlling a vehicle.

Additionally, the present disclosure relates to a data processing apparatus, a computer program, and a computer-readable storage medium.

Furthermore, the present disclosure is directed to a vehicle.

Also, the present disclosure relates to a method for training a combination of artificial neural networks.

### BACKGROUND ART

In this context, it is known that varying road surface conditions influence a driving behavior of a vehicle. In more detail, the road surface condition affects the friction between a tire of the vehicle and a road surface. This applies to both autonomous and non-autonomous vehicles. The road surface condition can be estimated by the use of sensors. In case a road area with potentially low friction between the tire and the road surface can be estimated correctly, this information can be used for adapting the driving behavior of the vehicle and/or to warn a vehicle user.

### SUMMARY

It is therefore an objective of the present disclosure to improve accuracy of a road surface condition estimation. Thereby, road safety shall be enhanced.

The problem is at least partially solved or alleviated by the subject matter of the independent claims of the present disclosure, wherein further examples are incorporated in the dependent claims.

According to a first aspect, there is provided a method for determining a road surface condition. The method comprises:
- obtaining first data, wherein the first data comprises a representation of the road surface and wherein the first data originates from a sensor of a first type,
- obtaining second data, wherein the second data comprises a representation of the road surface and wherein the second data originates from a sensor of a second type,
- generating third data by applying a feature extraction technique on the first data,
- generating fourth data by applying a feature extraction technique on the second data,
- generating fifth data by fusing the third data and the fourth data, and
- determining the road surface condition by classifying the fifth data in at least one class of a set of predefined classes.

It is to be understood that the road surface condition may correspond to different road surface scenarios. This means that the road surface may be dry, wet, slushy, snowy, or icy, which define the road surface condition in the context of the present disclosure. Thus, the method determines whether the road surface is dry, wet, slushy, snowy, and/or icy. It is also possible that different degrees of these road surface conditions may be determined, e.g. different degrees of wetness, slushiness, snowiness or iciness. The relevant road surface conditions and the number and type of classes used for classifying the fifth data may be chosen depending on a specific application in which the method according to the first aspect shall be used. To this end, first data originating from a sensor of a first type and second data originating from a sensor of a second type are used. It is emphasized that the sensor of the first type differs from the sensor of the second type. In other words, the two sensors are based on different sensor technologies. However, the sensor of the first type and the sensor of the second type capture at least partly the same road surface area. In other words, a field of detection of the sensor of the first type and a field of detection of the sensor of the second type have an overlap. Thus, the road surface condition is determined for a road surface that is covered by both the field of detection of the sensor of the first type and the field of detection of the sensor of the second type. Applying a feature extraction technique on the first data for generating third data means that features of the first data may be extracted from the first data. Analogously, applying a feature extraction technique on the second data for generating fourth data means that features of the second data may be extracted from the second data. From both the first data and the second data, features are extracted which are relevant for determining a road surface condition. In an example, the extracted features comprise color features such as color intensity parameters, e.g. RGB intensity parameters. Additionally or alternatively, the extracted features comprise optical features such as reflectivity. Further additionally or alternatively, the extracted features comprise geometric features, e.g. borderlines between areas of different color and/or different optical properties. In that a feature extraction technique is applied on the first data and on the second data, the relevant information is extracted from the first data and the second data. This enhances accuracy and additionally improves computational efficiency. Fusing the third data and the fourth data to generate fifth data means that the third data and the fourth data are combined. In other words, the content of the third data and the content of the fourth data are combined. In an example, a deep fusion technique is applied. Thus, the fifth data comprise the information of the third data and the fourth data in a single data set. The set of predefined classes may correspond to different road surface conditions as has been mentioned above. Thus, by classifying the fifth data in at least one class of a set of predefined classes enables determining the road surface condition. Altogether, the method has the effect that the accuracy of a road surface condition estimation is improved. This can be explained by first data and second data originating from sensors of different type. Thereby, the validity and reliability of the fifth data is increased compared to other approaches, for example if compared to approaches wherein the first data and the second data originate from sensors of the same type. Moreover, road safety is enhanced, if the road surface condition estimation is improved.

According to an example, the first data comprises image data representing the road surface. Additionally or alternatively, the second data comprises point cloud data representing the road surface. This means that the sensor of the first type may be an optical camera. In an example, the image data may comprise color images represented by red, green, and blue values for each pixel. Therefore, the feature extraction technique on the first data for generating third data may comprise extracting features associated with the red, green, and blue values. The sensor of the second type may be a light detection and ranging (lidar) sensor. Such a sensor may be configured to provide a point cloud. In other words, the detection result of such a sensor has the form of a point cloud. In this context, the point cloud data may comprise a representation of plurality of points, wherein each point may be associated with a distance of the respective point from the sensor of the second type. Thus, each point may be associated with three-dimensional geometric data, comprising values in three coordinate directions. Further, each point may be associated with a reflectance value. In an example, the reflectance value may be visualized by a color scheme or grey scales. Therefore, the feature extraction technique applied on the second data for generating fourth data allows to extract reflectance values for each point and/or an angle derived from the distance values and/or the distance of the respective point from the sensor of the second type. Thus, by using image data and/or point cloud data as a basis for determining the road surface condition, the accuracy of the road surface condition estimation may be further improved. This is because the different types of sensors are able to detect different environmental phenomena and, thus, provide different types of information.

According to an example, the second data comprises point cloud data representing the road surface, wherein the point cloud data are indicative of an accumulated point cloud. This means that the point cloud data describe a combination of two or more point clouds, i.e. an accumulation of two or more point clouds. To this end, point clouds originating from different sensors or point clouds originating from different sensor readings, e.g. at different points in time, may be accumulated. In the latter case, the sensor readings may be indicative of the same portion of the road even though taken at different points in time. Using an accumulated point cloud further enhances the accuracy of the representation of the road surface.

According to an example, generating third data by applying a feature extraction technique comprises using an artificial neural network. Additionally or alternatively, generating fourth data by applying a feature extraction technique comprises using an artificial neural network. In simplified words, an artificial neural network is used to extract features from the first data, i.e. generate the third data, and an artificial neural network is used to extract features from the second data, i.e. generate fourth data. Either of the two artificial neural networks may be based on a convolutional neural network architecture or a point-wise processing neural network. The convolutional neural network architecture may be used in case the first data comprises image data. Thus, the features may be extracted from the image data using a convolutional neural network. In this context, image data may comprise color images. The point-wise processing neural network may be used in case the second data comprises point cloud data. Thus, the features may be extracted from the point cloud data using a point-wise processing neural network. This has the effect that both the feature extraction technique for generating third data and the feature extraction technique for generating fourth data is reliable and computationally efficient. This is because artificial neural networks may be trained, so that the precision of the generated third data and the generated fourth data is comparatively high.

According to an example, generating fifth data by fusing the third data and the fourth data comprises using an artificial neural network. Additionally or alternatively, determining the road surface condition by classifying the fifth data comprises using an artificial neural network. For fusing the third data and the fourth data, a multi-layer perceptron (MLP) model may be used. The multi-layer perceptron model may comprise at least two fully connected layers and a plurality of non-linear activation functions. A multi-layer perceptron model may also be used for classifying the fifth data. This has the effect that both the fusing of the third data and the fourth data for generating fifth data and the classifying of the fifth data may be done with high precision and reliability. This is because the said artificial neural networks may be trained to the respective objective. It is emphasized that different artificial neural networks may be used for the fusion and the classification.

According to an example, the method further comprises limiting the first data to a representation of a sub-section of the road surface. Additionally or alternatively, the method further comprises limiting the second data to a representation of a sub-section of the road surface. A sub-section of the road surface may be understood as portion of the road surface. It is emphasized that the two sub-sections of the road surface may be at least partly the same sub-sections of the road surface. This means that the representation of the sub-section to which the first data is limited and the representation of the sub-section to which the second data is limited have an overlap. This has the effect that the road surface condition in a specific sub-section of a road surface can be determined. The smaller a sub-section of the road surface, the more accurate may be the road surface condition estimation for this sub-section. This is because the likelihood of different actual road surface conditions within the sub-section of the road surface decreases the smaller the sub-section. Therefore, the accuracy of the road surface condition estimation may be improved. Additionally or alternatively, limiting the first data to a representation of a sub-section of the road surface and/or limiting the second data to a representation of a sub-section of the road surface may increase computational efficiency. This is due to the fact that by using such a limitation a reduced data volume needs to be processed. Moreover, such a limitation may be used in order to adapt the present method to a specific application.

According to an example, the method is executed repeatedly or at least twice in parallel, wherein in each execution of the method the first data and/or the second data is limited to a representation of a different sub-section of the road surface. These sub-sections can be arranged in a grid-like manner or a grid-like structure. Thus, the road surface condition may be determined by determining a road surface condition for a plurality of sub-sections of the road surface, wherein the sub-sections may be arranged in a grid-like manner. The grid-like structure can be varying in size depending on the resolution required and/or depending on the specific application. This has the effect that the road surface condition in a plurality of sub-sections of the road surface can be determined with high accuracy. Due to the fact that the likelihood of different actual road surface conditions within a comparatively small sub-section of the road surface is small or non-existent, the accuracy of the road surface condition estimation over a larger road surface area may be improved by arranging the sub-sections in a grid-like manner or a grid-like structure. Additionally or alternatively, such a configuration may enhance computational efficiency, in particular when using parallelization.

According to an example, the predefined classes comprise one or more of a first class relating to a dry road surface, a second class relating to a wet road surface, a third class relating to a slushy road surface, a fourth class relating to a snowy road surface, and a fifth class relating to an icy road surface. This covers several alternatives. In a first alternative, only one of the five classes is used as predefined class. In the other alternatives, either two, three, four, or all five classes are used as predefined classes. Each of the predefined classes may correspond to an actual road surface condition. This has the effect that the accuracy of the road surface condition estimation may be improved.

According to a further example, the predefined classes comprise at least two classes relating to different degrees of a wet road surface, e.g. slightly wet and very wet, to different degrees of slushiness, e.g. slightly slushy and very slushy, to different degrees of snowiness, e.g. slightly snowy and very snowy, and/or to different degrees of iciness, e.g. slightly icy and very icy. Each of the predefined classes may correspond to an actual road surface condition. This has the effect that the accuracy of the road surface condition estimation may be improved.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a method for controlling a vehicle. The method comprises:
- determining a road surface condition using the method according to the first aspect, and
- causing adjustment of a driving parameter and/or causing a warning based on the determined road surface condition.

A driving parameter may be parameters influencing braking or deceleration of the vehicle, acceleration of the vehicle, e.g. via a traction control system, steering of the vehicle and/or the chassis suspension. In an example, a speed of the vehicle may be reduced. In another example, braking of the vehicle may be done in a particularly smooth way. In still another example, steering of the vehicle may be executed in a particularly gentle manner. The warning may be acoustical, visual, and/or haptic. The warning may be provided to a vehicle user or to another road user. This has the effect that road safety may be increased. This applies to both autonomously driven vehicle and manually driven vehicle.

According to a third aspect, there is provided a data processing apparatus comprising means for carrying out the method of the first aspect and/or the method of the second aspect. This covers three alternatives. In a first alternative, the data processing apparatus comprises means for carrying out the method of the first aspect. In a second alternative, the data processing apparatus comprises means for carrying out the method of the second aspect. In a third alternative, the data processing apparatus comprises means for carrying out both the method of the first aspect and the method of the second aspect. Thus, using the data processing apparatus according to the present disclosure, the determination of a road surface condition may be enhanced. More precisely, the accuracy of a road surface condition estimation is improved. This can be explained by first data and second data originating from sensors of different types. Moreover, road safety is enhanced due to the improved determination of a road surface condition.

According to a fourth aspect, there is provided a vehicle. The vehicle comprises a data processing apparatus according to the third aspect, a sensor of a first type, and a sensor of a second type. The sensor of the first type and the sensor of the second type are communicatively connected to the data processing apparatus. As has been mentioned before, the field of detection of the sensor of the first type and the field of detection of the sensor of the second type have an overlap. This enhances road safety.

According to an example, one of the sensor of the first type and the sensor of the second type is an optical camera and the respective other one of the sensor of the first type and the sensor of the second type is a lidar sensor. The optical camera may be a camera capturing colored images including red, green, and blue values for each pixel. Both types of sensors may be position in a way so that they capture at least partly the same road surface. Thus, by using an optical camera and/or a lidar sensor providing first data and second data, the accuracy of the road surface condition estimation may be improved. This is because the different types of sensors provide different types of information.

According to a fifth aspect, there is provided a computer program comprising instructions which, when the computer program is executed by a computer, cause the computer to carry out the method of the first aspect and/or the method of the second aspect. This covers three alternatives. In a first alternative, the computer program comprises instructions which, when the computer program is executed by a computer, cause the computer to carry out the method of the first aspect. In a second alternative, the computer program comprises instructions which, when the computer program is executed by a computer, cause the computer to carry out the method of the second aspect. In a third alternative, the computer program comprises both instructions which, when the computer program is executed by a computer, cause the computer to carry out the method of the first aspect and instructions which, when the computer program is executed by a computer, cause the computer to carry out the method of the second aspect. Thus, using the computer program according to the present disclosure, road surface condition estimation may be enhanced. More precisely, the accuracy of a road surface condition estimation is improved. Moreover, road safety is enhanced.

According to a sixth aspect, there is provided a computer-readable storage medium comprising instructions which, when executed by a computer, cause the computer to carry out the method of the first aspect and/or the method of the second aspect. This covers three alternatives. In a first alternative, the computer-readable storage medium comprises instructions which, when executed by a computer, cause the computer to carry out the method of the first aspect. In a second alternative, the computer-readable storage medium comprises instructions which, when executed by a computer, cause the computer to carry out the method of the second aspect. In a third alternative, the computer-readable storage medium comprises both instructions which, when executed by a computer, cause the computer to carry out the method of the first aspect and instructions which, when executed by a computer, cause the computer to carry out the method of the second aspect. Thus, using the computer-readable storage medium according to the present disclosure, road surface condition estimation may be enhanced. More precisely, the accuracy of a road surface condition estimation is improved. Moreover, road safety is enhanced, if the road surface condition estimation is improved.

According to a seventh aspect, there is provided a method for training a combination of artificial neural networks. The method comprises:
- providing a first artificial neural network configured for generating third data by applying a feature extraction technique on first data, wherein the first data comprises a representation of a road surface and wherein the first data originates from a sensor of a first type,
- providing a second artificial neural network configured for generating fourth data by applying a feature extraction technique on second data, wherein the second data comprises a representation of a road surface and wherein the second data originates from a sensor of a second type,
- providing a third artificial neural network configured for generating fifth data by fusing the third data and the fourth data,
- providing a fourth artificial neural network configured for classifying the fifth data in at least one of a set of predefined classes, and
- training the combination of the first artificial neural network, the second artificial neural network, the third artificial neural network, and the fourth artificial neural network in an end-to-end manner using training data comprising first data annotated with at least one of the predefined classes and comprising second data annotated with at least one of the predefined classes.

The combination of artificial neural networks may be seen as a single deep learning network. Using the present method, this single deep learning network can be trained in an end-to-end manner. In other words, the combination of artificial neural networks can be trained end-to-end, i.e. together. Due to this training, the combination of artificial neural networks implicitly is trained to automatically extract relevant features from first data and second data. i.e. generate third data and fourth data, to fuse these features, i.e. generate fifth data, and to classify the fused data, i.e. the fifth data, for road surface condition estimation. It is noted that each of the first artificial neural network, the second artificial neural network, the third artificial neural network, and the fourth artificial neural network may be pre-trained based on an associated road surface condition training dataset. However, such a pre-training is optional. The pre-training has the effect that the end-to-end training is quicker. Altogether, the method for training the combination of artificial neural networks is efficient and allows to provide a combination of trained artificial neural networks that allows to determine a road surface condition with high accuracy. Moreover, such a trained combination of artificial neural networks enhances road safety.

According to an example, training the combination of the first artificial neural network, the second artificial neural network, the third artificial neural network, and the fourth artificial neural network in an end-to-end manner comprises back propagation. Thus, by using back propagation, incorrect parameters indicating deficiencies between the estimated and the actual road surface condition may be adjusted during the training of the combination of the artificial neural networks. This allows to train the combination of artificial neural networks in an efficient and accurate manner. This has the effect that the trained combination of artificial neural networks may provide an enhanced road surface condition estimation.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a data processing apparatus according to the present disclosure, wherein the data processing apparatus comprises means for carrying out a method according to the present disclosure for controlling a vehicle and a method according to the present disclosure for determining a road surface condition,
- Figure 2a: shows an exemplary representation of image data provided by an optical camera, wherein the image data represent a road surface,
- Figure 2b: shows an exemplary representation of point cloud data provided by lidar sensor, wherein the point cloud data represent the same road surface as the image data of Figure 2a,
- Figure 3: schematically shows a representation of a plurality of different sub-sections of the road surface of Figures 2a and 2b,
- Figure 4: illustrates steps of the method according to the present disclosure for controlling the vehicle and of the method according to the present disclosure for determining a road surface condition,
- Figure 5: illustrates an architecture of artificial neural networks used for executing the method according to the present disclosure for controlling the vehicle and for executing the method according to the present disclosure for determining a road surface condition, and
- Figure 6: illustrates steps of a method according to the present disclosure for training a combination of artificial neural networks.

### DETAILED DESCRIPTION

The Figures are merely schematic representations and serve only to illustrate examples of the disclosure. Identical or equivalent elements are in principle provided with the same reference signs.

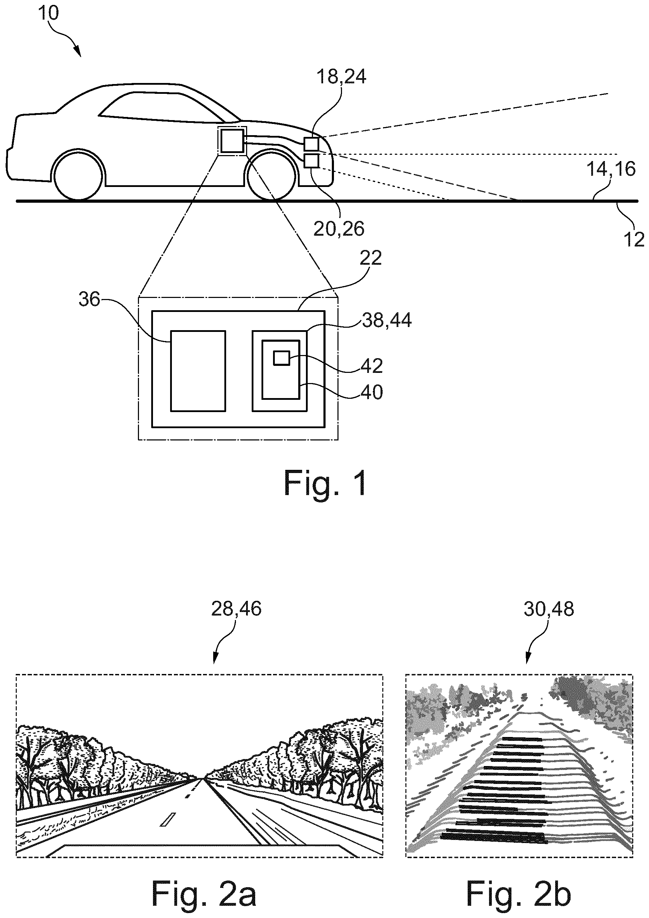

Figure 1 shows a vehicle 10 that travels on a road 12. The road 12 comprises a road surface 14, which may have different road surface conditions 16. The road surface conditions 16 may be dry, wet, slushy, snowy, or icy. It is understood that in other applications, other types and/or a different amount road surface conditions may be used.

The vehicle 10 comprises a sensor 18 of a first type, a sensor 20 of a second type, and a data processing apparatus 22.

In the present example, the sensor 18 of the first type is an optical camera 24. The optical camera 24 is able to provide color images. Therefore, the optical camera 24 may be called an RGB camera.

The sensor 20 of the second type is a lidar sensor 26.

Both the optical camera 24 and the lidar sensor 26 are communicatively connected to the data processing apparatus 22. The optical camera 24 and the lidar sensor 26 are positioned on the vehicle 10 to capture at least partly the same road surface 14. This means that a field of detection of the optical camera 24 and a field of detection of the lidar sensor 26 have an overlap. In the present example, both the field of detection of the optical camera 24 and the field of detection of the lidar sensor 26 are positioned in front of the vehicle 10 when considering a standard forward driving direction.

The optical camera 24 is configured to provide image data 28 representing the road surface 14. In the present example, the optical camera 24 is configured to capture color images, e.g. including red, green, and blue values for each pixel. An example of such image data 28 is represented in Figure 2a.

The lidar sensor 26 is configured to provide point cloud data 30 representing the road surface 14. An example of such point cloud data is represented in Figure 2b. The point cloud data 30 comprise a plurality of points, wherein each point is associated with a distance of the respective point from the sensor 20 of the second type. Thus, each point is associated with three-dimensional data, wherein each point comprises distance values in three coordinate directions. Further, each point is associated with a reflectance value.

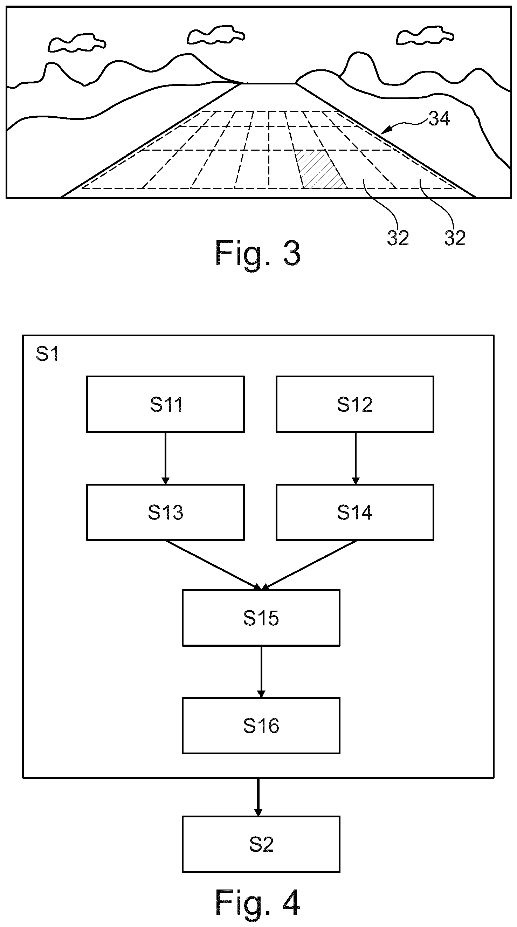

Figure 3 schematically shows a representation of a plurality of different sub-sections 32 of the road surface 14. For the ease of readability, only two sub-sections 32 are provided with a reference sign in Figure 3. A single sub-section 32 may be generated by limiting the image data 28 and/or the point cloud data 30 to the associated sub-section 32.

In the example of Figure 3, a total of 24 sub-sections is shown. In this example, the image data 28 and/or the point cloud data 30 may be limited to each of the sub-sections 32 in a time sequential manner. The 24 different sub-sections 32 are arranged in a grid-like structure 34. The grid-like structure 34 may vary in size depending on the required resolution when determining a road surface condition as will be explained in more detail further below.

Coming back to Figure 1, the data processing apparatus 22 comprises a data processing unit 36 and a data storage unit 38. The data storage unit 38 comprises a computer-readable storage medium 40. On the computer-readable storage medium 40, there is provided a computer program 42.

The computer program 42 and, thus, also the computer-readable storage medium 40, comprise instructions which, when executed by the data processing unit 36, or, more generally speaking, a computer, cause the computer or the data processing unit 36 to carry out a method for controlling a vehicle 10.

Consequently, the data storage unit 38 and the data processing unit 36 form means 44 for carrying out the method for controlling the vehicle 10.

In the following, the method for controlling the vehicle 10 will be explained in more detail (cf. Figure 4).

In a first step S1 of the method for controlling the vehicle 10, the road surface condition 16 is determined. In this first step S 1, a method for determining the road surface condition 16 is executed.

The method for determining the road surface condition 16 comprises a total of six steps S 11, S12, S13, S14, S15, S16. In the following, the steps of the method for determining the road surface condition 16 will be designated with reference signs S1x in order to distinguish these steps over the steps of the method for controlling the vehicle 10 which are designated with reference signs Sy.

In this context, the image data 28 may as well be called first data 46 and the point cloud data 30 may as well be called second data 48.

In a first step S11 of the method, first data 46 is obtained, wherein the first data 46 originates from the optical camera 24.

In a second step S12 of the method, second data 48 is obtained, wherein the second data 48 originates from the lidar sensor 26.

In other words, in the first step S11 of the method, image data 28 is obtained and in the second step S12 of the method, point cloud data 30 is obtained.

In a third step S13 of the method, third data 50 is generated. This is done by applying a feature extraction technique on the first data 46 using an artificial neural network 52. In the present example, the artificial neural network 52 is a convolutional neural network. The artificial neural network 52 may be called a first artificial neural network 52.

In a fourth step S14 of the method, fourth data 54 is generated by applying a feature extraction technique on the second data 48 using an artificial neural network 56. In the present example, the artificial neural network 56 is a point-wise processing neural network. The artificial neural network 56 may be called a second artificial neural network 56.

In a fifth step S15 of the method, fifth data 58 is generated. Generating fifth data 58 is done by fusing the third data 50 and the fourth data 54 using an artificial neural network 60. In the present example, the artificial neural network 60 is a multi-layer perceptron (MLP) neural network. The artificial neural network 60 may be called a third artificial neural network 60.

In a sixth step S16 of the method, the road surface condition 16 is determined by classifying the fifth data 58 in at least one class of a set of predefined classes using an artificial neural network 62. In the present example, the artificial neural network 62 is a multi-layer perceptron (MLP) neural network. The artificial neural network 62 may be called a fourth artificial neural network 62. The predefined classes comprise a first class relating to a dry road surface 14, a second class relating to a wet road surface 14, a third class relating to a slushy road surface 14, a fourth class relating to a snowy road surface 14, and a fifth class relating to an icy road surface 14.

Altogether, by executing the first step S 1 of the method for controlling the vehicle, a road surface condition 16 is determined.

In a second step S2 of the method for controlling the vehicle 10, an adjustment of a driving parameter and a warning are caused based on the determined road surface condition 16. In the present example, a driving parameter is a parameter that influences the braking of the vehicle 10, the traction control, or the chassis suspension of the vehicle 10. Further, the warning comprises an acoustic signal, a visual signal, or a haptic signal and is transferred to a vehicle user, accordingly.

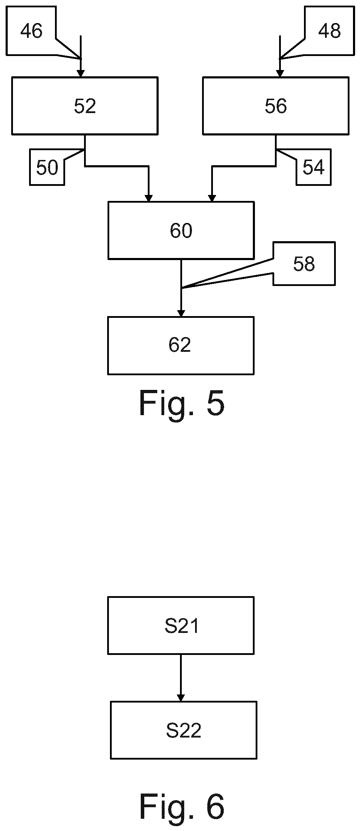

The architecture of the artificial neural networks 52, 56, 60, 62 is summarized in Figure 5. The artificial neural networks 52, 56, 60, 62 may as well be called a combination of artificial neural networks.

Figure 6 shows a schematic representation of a method for training a combination of artificial neural networks, i.e. for training the artificial neural networks 52, 56, 60, 62 together. The steps of the method for training the combination of neural networks are designated with reference signs S2x.

In a first step S21 of the method, the combination of artificial neural networks is provided. The combination of artificial neural networks comprises the first artificial neural network 52, the second artificial neural network 56, the third artificial neural network 60, and the fourth artificial neural network 62. Therefore, when the combination of artificial neural networks is provided, the four artificial neural networks 52, 56, 60, 62 are provided.

In a second step S22 of the method, the combination of artificial neural networks is trained in an end-to-end manner. This means that all four artificial neural networks 52, 56, 60, 62 are trained in a single deep learning routine. In the present example, the training of the combination of artificial neural networks in an end-to-end manner comprises back propagation. For the training of the combination of artificial neural networks, training data is used that comprises image data 28 annotated with at least one of the predefined classes (cf. above) and point cloud data 30 annotated with at least one of the predefined classes (cf. above).

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: road
- 14: road surface
- 16: road surface condition
- 18: sensor of a first type
- 20: sensor of a second type
- 22: data processing apparatus
- 24: optical camera
- 26: lidar sensor
- 28: image data
- 30: point cloud data
- 32: sub-section
- 34: grid-like structure
- 36: data processing unit
- 38: data storage unit
- 40: computer-readable storage medium
- 42: computer program
- 44: means for carrying out the method for controlling a vehicle
- 46: first data
- 48: second data
- 50: third data
- 52: first artificial neural network
- 54: fourth data
- 56: second artificial neural network
- 58: fifth data
- 60: third artificial neural network
- 62: fourth artificial neural network
- S 1: first step of the method for controlling a vehicle
- S2: second step of the method for controlling a vehicle
- S 11: first step of the method for determining a road surface condition
- S12: second step of the method for determining a road surface condition
- S 13: third step of the method for determining a road surface condition
- S 14: fourth step of the method for determining a road surface condition
- S 15: fifth step of the method for determining a road surface condition
- S 16: sixth step of the method for determining a road surface condition
- S21: first step of the method for training a combination of artificial neural networks
- S22: second step of the method for training a combination of artificial neural networks

## Claims

1. A method for determining a road surface condition (16), the method comprising:
- obtaining first data (46), wherein the first data (46) comprises a representation of the road surface (14) and wherein the first data (46) originates from a sensor (18) of a first type,
- obtaining second data (48), wherein the second data (48) comprises a representation of the road surface (14) and wherein the second data (48) originates from a sensor (20) of a second type,
- generating third data (50) by applying a feature extraction technique on the first data (46),
- generating fourth data (54) by applying a feature extraction technique on the second data (48),
- generating fifth data (58) by fusing the third data (50) and the fourth data (54), and
- determining the road surface condition (16) by classifying the fifth data (58) in at least one class of a set of predefined classes.

2. The method according to claim 1, wherein the first data (46) comprises image data (28) representing the road surface (14) and/or wherein the second data (48) comprises point cloud data (30) representing the road surface (14).

3. The method according to any of the preceding claims, wherein generating third data (50) by applying a feature extraction technique comprises using an artificial neural network (52) and/or wherein generating fourth data (54) by applying a feature extraction technique comprises using an artificial neural network (56).

4. The method according to any of the preceding claims, wherein generating fifth data (58) by fusing the third data (50) and the fourth data (54) comprises using an artificial neural network (60) and/or wherein determining the road surface condition (16) by classifying the fifth data (58) comprises using an artificial neural network (62).

5. The method according to any of the preceding claims, further comprising limiting the first data (46) to a representation of a sub-section (32) of the road surface (14) and/or further comprising limiting the second data (48) to a representation of a sub-section (32) of the road surface (14).

6. The method according to claim 5, wherein the method is executed repeatedly or at least twice in parallel, wherein in each execution of the method the first data (46) and/or the second data (48) is limited to a representation of a different sub-section (32) of the road surface (14).

7. The method according to any one of the preceding claims, wherein the predefined classes comprise one or more of a first class relating to a dry road surface (14), a second class relating to a wet road surface (14), a third class relating to a slushy road surface (14), a fourth class relating to a snowy road surface (14), and a fifth class relating to an icy road surface (14).

8. A method for controlling a vehicle (10), the method comprising
- determining a road surface condition (16) using the method according to any one of the preceding claims, and
- causing adjustment of a driving parameter and/or causing a warning based on the determined road surface condition (16).

9. A data processing apparatus (22) comprising means for carrying out the method of any one of claims 1 to 7 and/or the method of claim 8.

10. A vehicle (10) comprising a data processing apparatus (22) according to claim 9, a sensor (18) of a first type and a sensor (20) of a second type, wherein the sensor (18) of the first type and the sensor (20) of the second type are communicatively connected to the data processing apparatus (22).

11. The vehicle (10) of claim 10, wherein one of the sensor (18) of the first type and the sensor (20) of the second type is an optical camera (24) and the respective other one of the sensor (18) of the first type and the sensor (20) of the second type is a lidar sensor (26).

12. A computer program (42) comprising instructions which, when the computer program (42) is executed by a computer, cause the computer to carry out the method of any one of claims 1 to 7 and/or the method of claim 8.

13. A computer-readable storage medium (40) comprising instructions which, when executed by a computer, cause the computer to carry out the method of any one of claims 1 to 7 and/or the method of claim 8.

14. A method for training a combination of artificial neural networks, the method comprising:
- providing a first artificial neural network (52) configured for generating third data (50) by applying a feature extraction technique on first data (46), wherein the first data (46) comprises a representation of a road surface (14) and wherein the first data (46) originates from a sensor (18) of a first type,
- providing a second artificial neural network (56) configured for generating fourth data (54) by applying a feature extraction technique on second data (48), wherein the second data (48) comprises a representation of a road surface (14) and wherein the second data (48) originates from a sensor (20) of a second type,
- providing a third artificial neural network (60) configured for generating fifth data (58) by fusing the third data (50) and the fourth data (54),
- providing a fourth artificial neural network (62) configured for classifying the fifth data (58) in at least one of a set of predefined classes, and
- training the combination of the first artificial neural network (52), the second artificial neural network (56), the third artificial neural network (60), and the fourth artificial neural network (62) in an end-to-end manner using training data comprising first data (46) annotated with at least one of the predefined classes and comprising second data (48) annotated with at least one of the predefined classes.

15. The method of claim 14, wherein training the combination of the first artificial neural network (52), the second artificial neural network (56), the third artificial neural network (60), and the fourth artificial neural network (62) in an end-to-end manner comprises back propagation.
